# EUROPÄISCHE PATENTANMELDUNG

(11) **EP 0 531 634 A1**
(43) Veröffentlichungstag der Anmeldung: **17.03.1993**
(21) Anmeldenummer: 92110498.0
(22) Anmeldetag: 22.06.1992
(51) Int. Cl.: B60J 1/20

(54) **Sonnenschutzvorrichtung**

(30) Priorität: 12.09.1991 DE 9111346 U; 01.02.1992 DE 9201233 U
(71) Anmelder: APA GmbH & Co KG OTTO BAUDER, D-70736 Fellbach (DE)
(72) Erfinder: Bauder, Otto, W-7012 Fellbach (DE)
(74) Vertreter: Einsele, Rolf

(57) **Zusammenfassung**

Die Erfindung betrifft eine nachrüstbare Sonnenschutzvorrichtung für die Heckscheibe (1) eines Kraftfahrzeuges, insbesondere eines Pkw, mit einem Sonnenschutzrollo (10) und einer Rollvorrichtung (12,22), die unter Federspannung das Sonnenschutzrollo (10) in eine eingerollte Position bringt und hält, und die Befestigungselemente (14,16,17) für das Anbringen im Heckscheibenbereich aufweist, die so an der Rollvorrichtung (12,22) angeordnet sind, daß diese im Bereich der Ränder der Heckscheibe befestigbar ist und das Sonnenschutzrollo (10) entsprechend der Befestigung von oben nach unten ausziehbar ist.

## Beschreibung

Die Erfindung betrifft eine Sonnenschutzvorrichtung für die Heckscheibe eines Kraftfahrzeu ges, insbesondere eines Pkw, mit einem Sonnenschutzrollo und einer Rollvorrichtung, die unter Federspannung das Sonnenschutzrollo in eine eingerollte Position bringt und hält und die Befestigungselemente für das Anbringen im Heckscheibenbereich aufweist.

Sonnenschutzvorrichtungen mit von Rollvorrichtungen abrollbaren Sonnenschutzrollos sind bekannt. Solche Sonnenschutzvorrichtungen sind üblicherweise auf der Heckablage von Kraftfahrzeugen montiert oder - bei Erstausstattung - in die Heckablage integriert. Handbetätigte Rollos werden an Einhängehaken, die im Randbereich der Heckscheiben der Kraftfahrzeuge vorgesehen sind, festgehängt. Neben diesen handbetätigten Sonnenschutzrollos gibt es auch mit Elektromotoren betriebene. Auch in diesem Fall ist die Sonnenschutzvorrichtung auf der Heckablage oder in diese integriert untergebracht. Über eine Gelenkkonstruktion werden solche Sonnenschutzrollos motorbetrieben aufgerichtet und bei Bedarf wieder zusammengerollt.

Bei der Unterbringung solcher Sonnenschutzvorrichtungen auf der Heckablage bewegen sich die Sonnenschutzrollos in jedem Fall von unten nach oben. Obwohl diese Anordnung von den Gegebenheiten in Pkw's besonders sinnvoll erscheint, entsteht dadurch der Nachteil, daß bei Licht- und Sonneneinfall von oben stets das komplette Sonnenschutzrollo ausgezogen werden muß, damit die Heckscheibe im kritischen oberen Bereich abgedeckt ist. In sehr vielen Fällen würde eine wesentlich schmalere Abdeckung lediglich im Bereich der Oberseite der Heckscheibe vollkommen ausreichen. Da eine gewisse Sichtbeeinträchtigung durch solche Schutzvorrichtungen unvermeidlich ist, wäre dies aus der Sicht des Fahrzeugführers für den Überblick nach hinten sehr wünschenswert. Aus technischen Gegebenheiten ist es jedoch bei diesen Vorrichtungen nicht möglich.

Bei einer Reihe von Pkw ist es auch auf Grund der Gegebenheiten im Bereich der Heckablage ganz einfach ausgeschlossen, solche Sonnenschutzvorrichtungen zu montieren. Besonders schwierig ist dies bei den Fahrzeugen neuerer Generation, deren übergroße Glasflächen im Heckbereich den Sonnenschutz hinten sitzender Personen besonders wichtig erscheinen lassen, die aber andererseits besonders beengte Einbauverhältnisse durch die schrägstehenden Scheiben im Heckbereich bieten (spitzer Winkel zwischen Heckablage und Heckscheibe).

Die Erfindung bringt hier eine wesentliche Verbesserung dadurch, daß die Befestigungselemente so an der Rollvorrichtung angeordnet sind, daß diese im Bereich des oberen Randes der Heckscheibe befestigbar ist und das Rollo von oben nach unten ausziehbar ist.

Als Befestigungselemente können Vakuum-Saugplatten zum werkzeuglosen nachträglichen Befestigen der Sonnenschutzvorrichtung vorgesehen werden.

Ebenso gut kann das Befestigungselement aber auch mit Haftflächen versehen sein, mit denen es im Bereich der Heckscheibe aufgeklebt oder mit Klettbändern festgekrallt wird.

Am freien Ende des Sonnenschutzrollos kann dann mindestens eine Zugschnur angeordnet werden, in die Feststellelemente integriert sind. Die Feststellelemente können dabei in gleichmäßigen Abständen in der Zugschnur / in den Zugschnüren angeordnet sein. Es können die hinlänglich bekannten Knotenschnüre verwendet werden.

Die Zugschnur/Zugschnüre können mit ihren Feststellelementen an Einhängebügeln festgelegt werden, die der Befestigungsstelle der Rollvorrichtung im wesentlichen gegenüberliegen.

Eine besonders zweckmäßige Ausgestaltung der Sonnenschutzvorrichtung nach der Erfindung ergibt sich dann, wenn am freien Ende des Sonnenschutzrollos mindestens eine Zugschnur vorgesehen ist, die mit einer motorbetriebenen Wickelvorrichtung verbunden werden kann, wobei diese Wickelvorrichtung der Befestigungsstelle der Rollvorrichtung im wesentlichen gegenüberliegend angeordnet ist. Die Rollvorrichtung und die Wickelvorrichtung sollten einen Auszug des Sonnenschutzrollos zum ganzen oder weitgehenden Abdecken der Heckscheibe erlauben. Dies ist ohne weiteres dann erreichbar, wenn die motorbetriebene Wickelvorrichtung aus einem Elektro-Motor, mindestens einer Rutschkupplung, mindestens einer Drehwelle und einer Seilaufwickelrolle besteht, wobei diese Konstruktionselemente entweder in einer Aufnahme auf der Heckablage oder verdeckt unterhalb der Heckablage angeordnet sein können.

Der Elektro-Motor und damit die Wickelvorrichtung kann fernsteuerbar sein. Damit ist es möglich, Auszug und Aufrollen des Sonnenschutzrollos z.B. vom Armaturenbrett eines Pkw aus vorzunehmen.

Es kann aber auch auf Zugschnüre verzichtet werden und stattdessen das Feststellen im ausgezogenen Zustand über eine Haken-/Ösen-Konstruktion erreicht werden.

Eine Sonnenschutzvorrichtung nach der Erfindung mit einem Sonnenschutzrollo, das von einer Rollvorrichtung abrollbar ist, hat den besonderen Vorteil, daß gerade bei hochstehender Sonne auch schon mit einem Teilauszug eine sehr gute Schutzwirkung erzielt werden kann.

In der Zeichnung sind Ausführungsbeispiele des Gegenstandes der Erfindung dargestellt. Anhand dieser Ausführungsbeispiele sollen nachfolgend die Merkmale der Erfindung näher erläutert werden.

Es zeigt:
- Figur 1: eine Sonnenschutzvorrichtung, befestigt oberhalb der Heckscheibe eines Pkw;
- Figur 2: eine Sonnenschutzvorrichtung mit teilausgezogenem Sonnenschutzrollo;
- Figur 3: eine elektromotorbetriebene Sonnenschutzvorrichtung mit teilausgezogenem Sonnenschutzrollo;
- Figur 4: eine motorbetriebene Wickelvorrichtung, angeordnet verdeckt unterhalb der Heckablage;
- Figur 5: eine Wickelvorrichtung für eine Sonnenschutzvorrichtung zur Anordnung auf - oder unterhalb der Heckablage eines Pkw;
- Figur 6: ein Befestigungselement mit Trageteil und Lageverstellung und
- Figur 7: eine Haken-Ösen-Konstruktion zur Auszugssicherung.

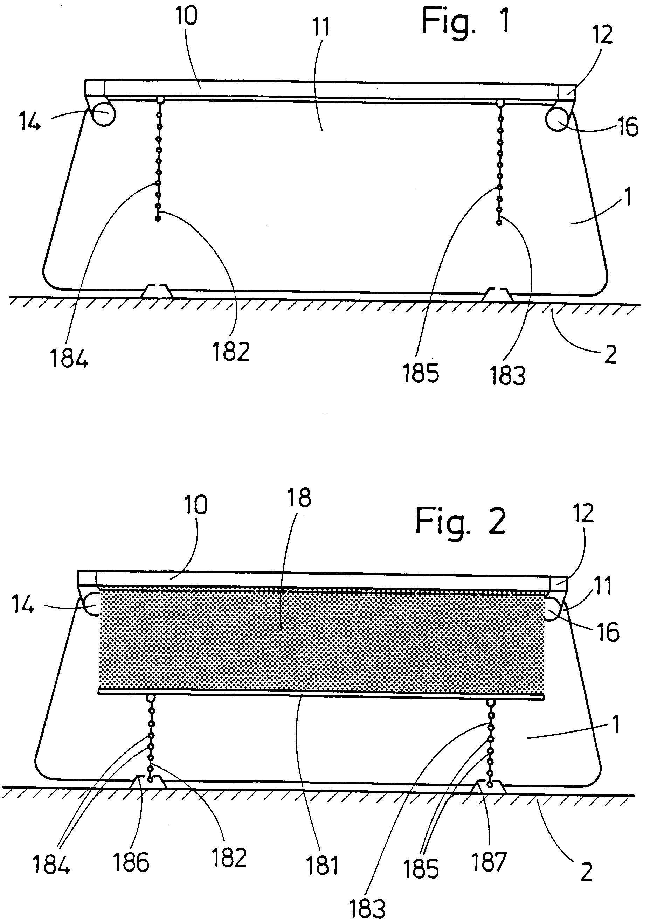

Mit 1 ist in Figur 1 die Heckscheibe eines Pkw bezeichnet. 2 ist die Heckablage, die üblicherweise unterhalb der Heckscheibe bis zur Oberkante der Rücksitzlehne eines Kfz verläuft.

Im Bereich des oberen Randes 11 der Heckscheibe, also im Bereich des Übergangs der Heckscheibe 1 in den Dachbereich ist eine Sonnenschutzvorrichtung 10 angeordnet. Diese Sonnenschutzvorrichtung 10 besteht aus einer Rollvorrichtung 12 und Befestigungselementen 14 und 16. Von der Rollvorrichtung 12 gegen die Wirkung einer nicht dargestellten Feder abrollbar ist ein Sonnenschutzrollo 18, der soweit ausziehbar nach unten vor die Heckscheibe 1 bringbar ist, daß diese vollständig oder annähernd vollständig abgedeckt ist.

Die Befestigungselemente 14 und 16 sind sogenannte Vakuum-Saugplatten. Dies sind hinlänglich bekannte saugerartige Gebilde, die nach dem Festdrücken auf einer glatten Oberfläche unter Bildung eines Vakuums festgelegt werden können. Das Vakuum wird dadurch gebildet, daß nach dem Festdrücken z.B. durch Drehen einer Gewindespindel die Gummi/Kunststoff-Saugerplatte eingezogen wird. Mit Hilfe solcher Befestigungselemente 14, 16 ist die Sonnenschutzvorrichtung 10 direkt an der Glasfläche der Heckscheibe 1 im äußersten oberen Randbereich 11 festlegbar.

Am freien Ende 181 des Sonnenschutzrollos 18 sind Zugschnüre 182 und 183 vorgesehen. Diese Zugschnüre 182, 183 weisen in gleichmäßigen Abständen Feststellelemente 184 bzw. 185 auf. Mittels dieser Feststellelemente 184 bzw. 185 können die Zugschnüre 182 bzw. 183 an Einhängebügeln 186 bzw. 187, die auf der Heckablage 2 montiert sind, in unterschiedlichen Höhen festgelegt werden. Damit kann der Sonnenschutzrollo 18 in unterschiedlichem Auszug unter unterschiedlicher Abdeckung der Heckscheibe festgelegt werden.

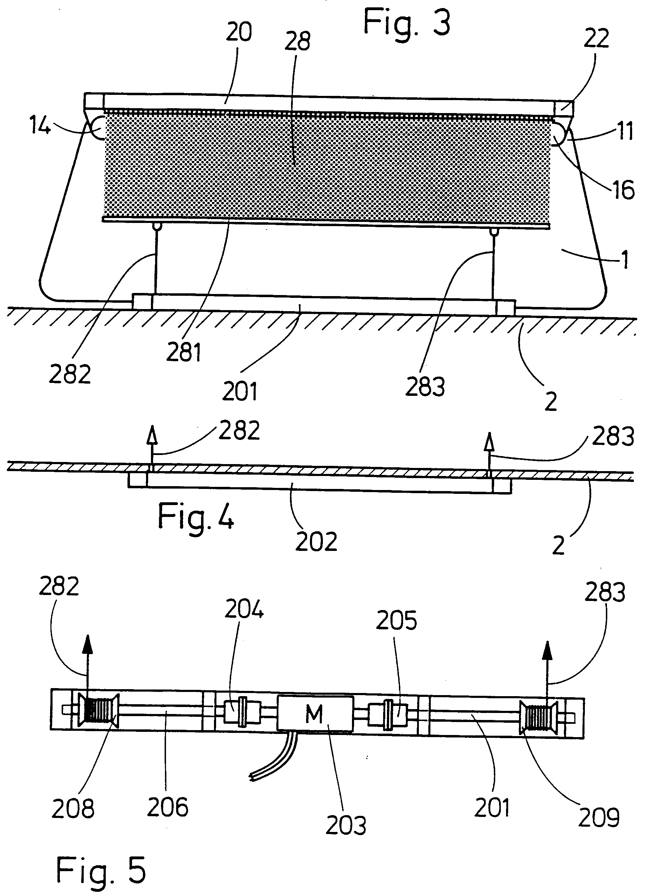

In den Fig. 3, 4 und 5 ist eine elektromotorbetriebene Sonnenschutzvorrichtung 20 gezeigt. Diese ist in ähnlicher Weise mit Befestigungselementen 14 bzw. 16 im oberen Randbereich der Heckscheibe 1 eines Kfz befestigt. Deshalb soll hier auf die Befestigungsart nicht mehr weiter eingegangen werden. Es wird insofern Bezug genommen auf die Beschreibung zu den Fig. 1 und 2.

Die Sonnenschutzvorrichtung 20 besteht wiederum aus einer Rollvorrichtung 22, von der ein Sonnenschutzrollo 28 gegen die Wirkung einer nicht dargestellten Feder abgerollt werden kann. Am freien Ende 281 sind 2 Zugschnüre 282 und 283 befestigt, über deren Funktion im Zusammenhang mit Fig. 5 noch genaueres gesagt wird.

Auf (siehe Fig. 3) oder unter (siehe Fig. 4) der Heckablage 2 ist im wesentlichen gegenüberliegend der Sonnenschutzvorrichtung 20 eine motorbetriebene Wickelvorrichtung 201 bzw. 202 angeordnet. Ihre Befestigung auf oder unterhalb der Heckablage 2 erfolgt in dem Fachmann geläufiger Art und Weise.

Die motorbetriebene Wickelvorrichtung 201, 202 ist aufgebaut aus einem Elektromotr 203, der im Ausführungsbeispiel nach Fig. 5 bei Verwendung von 2 Zugschnüren 282 und 283 zentral in der Wickelvorrichtung 201 angeordnet ist, je einer auf der Welle des Elektromotors 203 angeordneten Rutschkupplung 204, 205, je einer von der Rutschkupplung ausgehenden Drehwelle 206 bzw. 207 und je einer auf der Drehwelle fest angeordneten Seilaufwickelrolle 208 bzw. 209. Auf diesen Seilaufwickelrollen 208 bzw. 209 sind die Enden der Zugschnüre 282 und 283 so festgelegt, daß bei Einschaltung des Elektromotors 203 das Sonnenschutzrolle 28 gegen Federwirkung unter Zugwirkung ausgeübt von den Zugschnüren 282 und 283 auf- bzw. abgerollt wird.

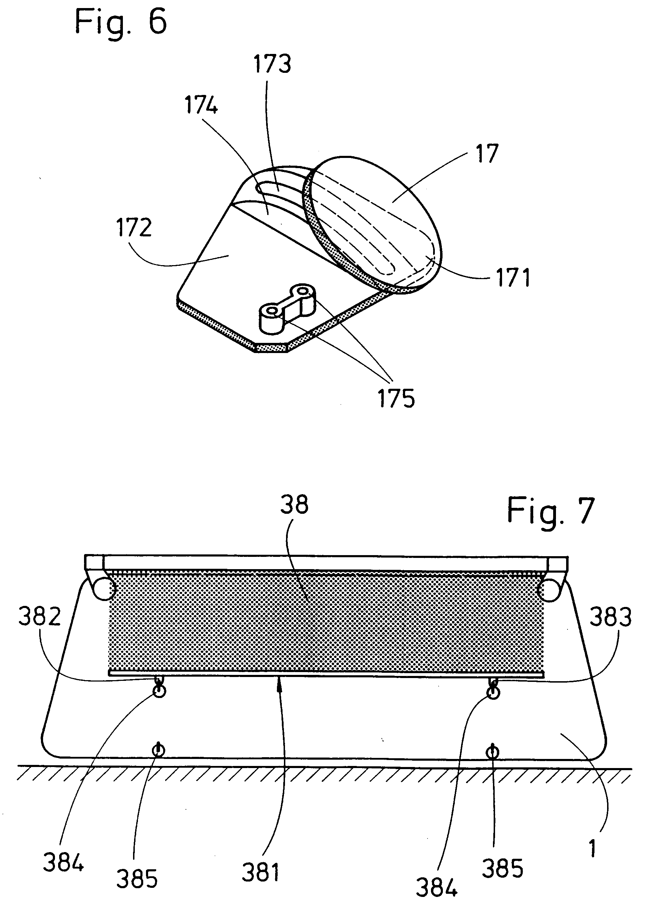

Fig. 6 zeigt ein Befestigungselement 17 für die Rollvorrichtung, das mit einer Haftfläche 171 an die Heckscheibe oder am Rand der Heckscheibe an irgendein anderes Karosserieteil bzw. Verkleidungsteil angeklebt oder mit Krallenbändern befestigt werden kann. Das Befestigungselement 17 ist Teil eines Trageteils 172 und an diesem in einem Längsschlitz 173 verschieblich befestigt (z.B. mit Gewinde und Verstellmutter). Der Längsschlitz 173 wiederum ist in einer konvexen Anformung 174 vorgesehen, so daß bei Verschiebung des Befestigungselements die Winkellage sich in bezug auf die Befestigungsfläche nur die Befestigungsaufnahmen 175 für das Rollo sich verändert. Somit kann man bei der Montage in gewissem Umfang Ausgleiche erreichen.

## Patentansprüche

1. Sonnenschutzvorrichtung für die Heckscheibe eines Kraftfahrzeuges, insbesondere eines Pkw, mit einem Sonnenschutzrollo und einer Rollvorrichtung, die unter Federspannung das Sonnenschutzrollo in eine eingerollte Position bringt und hält, und die Befestigungselemente für das Anbringen im Heckscheibenbereich aufweist, dadurch gekennzeichnet, daß die Befestigungselemente (14, 16, 17) so an der Rollvorrichtung (12, 22) angeordnet sind, daß diese im Bereich der oberen Ränder (11) der Heckscheibe (1) befestigbar ist und das Sonnenschutzrollo (18, 28) entsprechend der Befestigung von oben nach unten ausziehbar ist.

2. Sonnenschutzvorrichtung nach Anspruch 1, dadurch gekennzeichnet, daß die Befestigungselemente (14, 16) Vakuum-Saugplatten sind zum werkzeuglosen Befestigen der Sonnenschutzvorrichtung (10, 20).

3. Sonnenschutzvorrichtung nach Anspruch 1, dadurch gekennzeichnet, daß die Befestigungselemente (17) Flächen zum Aufkleben der Sonnenschutzvorrichtung oder zum Befestigen mit Klettbändern im Bereich der oberen Randzonen der Heckscheibe aufweisen.

4. Sonnenschutzvorrichtung nach Anspruch 3, dadurch gekennzeichnet, daß das Befestigungselement (17) mit seiner Fläche (171) an einem Trageteil (172) mit Aufnahmen (175) für die Rollvorrichtung in einem Längsschlitz (173) verschieblich befestigbar ist, wobei der Längsschlitz (173) in einer konvexen Anformung (174) des Trageteils (172) zur Veränderung der Winkellage verläuft.

5. Sonnenschutzvorrichtung nach Anspruch 1, dadurch gekennzeichnet, daß am freien Ende (281) des Sonnenschutzrollos (18) mindestens eine Zugschnur (182, 183) mit Feststellelementen (184,185) vorgesehen ist.

6. Sonnenschutzvorrichtung nach Anspruch 5, dadurch gekennzeichnet, daß die Feststellelemente (184, 185) in gleichmäßigen Abständen in der Zugschnur/ in den Zugschnüren (182,183) angeordnet sind.

7. Sonnenschutzvorrichtung nach Anspruch 5, dadurch gekennzeichnet, daß die Zugschnüre (182,183) mit den Feststellelementen (184, 185) an der Befestigungsstelle der Rollvorrichtung (12) im wesentlichen gegenüberliegenden Einhängebügeln (186,187) festlegbar sind.

8. Sonnenschutzvorrichtung nach Anspruch 1, dadurch gekennzeichnet, daß am freien Ende (281) des Sonnenschutzrollos (28) mindestens eine Zugschnur (282, 283) vorgesehen ist, die mit einer motorbetriebenen Wickelvorrichtung (201, 202) verbunden ist, die der Befestigungsstelle der Rollvorrichtung (22) im wesentlichen gegenüberliegend, einen Auszug zum ganzen oder wietgehenden Abdecken der Heckscheibe (1) erlaubend angeordnet ist.

9. Sonnenschutzvorrichtung nach Anspruch 8, dadurch gekennzeichnet, daß die motorbetriebene Wickelvorrichtung (201, 202) aus einem Elektro-Motor (203), mindestens eine Rutschkupplung (204, 205), mindestens 1 Drehwelle (206, 207) und mindestens einer Seilaufwickelrolle (208, 209) besteht.

10. Sonnenschutzvorrichtung nach Anspruch 8, dadurch gekennzeichnet, daß der Elektro-Motor (203) fernsteuerbar ist.

11. Sonnenschutzvorrichtung nach Anspruch 1, dadurch gekennzeichnet, daß am freien Ende (381) des Sonnenschutzrollos (38) mindestens eine Einhängeöse (382, 382) angeordnet ist, die in auf oder am Rande der Heckscheibe (1) in unterschiedlichen Auszugshöhen befestigbaren Einhängehaken (384, 385) einhängbar sind.
